# EUROPEAN PATENT SPECIFICATION

(11) **EP 2 871 928 B1**
(45) Date of publication and mention of the grant of the patent: **22.05.2019**
(21) Application number: 13765479.4
(22) Date of filing: 10.07.2013
(51) Int. Cl.: A01D 46/26

(54) **REINFORCEMENT MEMBER FOR A SHAKER PRONG FOR APPARATUSES FOR HARVESTING OLIVES AND SIMILAR PRODUCE**
VERSTÄRKUNGSELEMENT FÜR EINEN RÜTTLERZINKEN FÜR VORRICHTUNGEN ZUM ERNTEN VON OLIVEN UND ÄHNLICHEN PRODUKTEN
ÉLÉMENT DE RENFORCEMENT POUR UN FOURCHON DE SECOUEUR POUR APPAREILS DE RÉCOLTE D'OLIVES ET DE PRODUITS SIMILAIRES

(30) Priority: 11.07.2012 IT BO20120377
(43) Date of publication of application: 20.05.2015
(73) Proprietor: Minelli Elettromeccanica, 42015 Correggio (RE) (IT)
(72) Inventor: MINELLI, Ermanno, 42015 Correggio (RE) (IT)
(74) Representative: Manzella & Associati
(86) International application number: PCT/IB2013/055680
(87) International publication number: WO 2014/009907

(56) References cited:
- EP-A1- 1 520 463
- EP-A1- 1 943 895
- EP-A2- 2 138 028
- WO-A2-2007/129207
- FR-A1- 2 909 518
- US-A- 4 611 461
- US-A- 5 099 637

## Description

### Technical Field

The present invention concerns a reinforcement member for a shaker prong suitable to be used in an apparatus for harvesting olives and similar produce.

### Background Art

It has been known that for harvesting olives or other similar small size produce harvesting apparatuses are used, commonly known as beaters, which are suitable to work on branches of fruit trees, shaking them, in order to cause the detachment and then the fall of fruits.

Such beater devices generally comprise a support rod, preferably of telescopic type, suitable to be borne by a farming machine, or by hand by an operator at a suitable end handle. At its free end, the rod bears a series of shaker elements, having a shape fitted for being inserted among branches. The shaker elements are suitable to be operated in rotation or in tilting motion through pneumatic or electric drive.

In particular, it has been known the use of apparatuses, called "beaters", comprising combshaped beater elements, usually arranged in couple on the support element at the end of the support rod. Such elements are suitable to be operated tilting for example between a closed configuration, having the combs facing on parallel planes, and an open configuration, having the combs divergent.

Such apparatuses have made the olive harvesting operations quicker and easier, nevertheless they still present non negligible drawbacks.

In particular, it is important that the "combing out" of the foliage of the trees by means of the combs of such apparatuses occurs in homogeneous and safe way, both for the endurance of the item and for the safety of the plant. As a matter of facts, the insertion of prongs of the combs into the foliage and the following tilting motion, suitable to cause the detachment of fruits of the plant, submits the same prongs to cyclical flexion stress which can cause their breakage. At the same time, a too rigid action of the shaker prongs can damage fruits, as well as branches, thus compromising the future productiveness. On the contrary, even a too soft action on fruits can result quite ineffective.

It is then crucial to solve problems linked to the endurance and efficiency of the prongs of the combs. In particular, it is important to underline that prongs are stressed by cyclical dynamic loads, which can cause fatigue cracks when certain work frequencies or a certain number of cycles are reached. Fatigue cracks occur generally at the base of the prong, in particular where the prong is fastened to the support crossbar of the comb.

For example, patent EP1520463 discloses a removable fastening device for prongs of mobile combs for apparatuses for harvesting small fruits. Such device comprises two cooperating parts, the one of which is provided for being constrained to the proximal end of a prong, the two parts being shaped so as to engage respective diametrically opposed holes, made in the transversal support element of the prongs to be fastened.

Another example is disclosed in patent US 4,611,461, that describes an apparatus for picking small size produce comprising a shaker prong consisting of a comb like element integral with a crossbar. The crossbar is provided, at its opposite ends, with respective axial bores in which relative shafts are inserted. The shafts are coupled to the crossbar so as to transmit a rotational motion from a motor to the shaker prong.

Anyway, such known solutions do not solve the cited problems in an optimal way, in fact they increase the structural complexity of the apparatuses for harvesting olives and similar produce, and make difficult the assembling and the replacement of shaker combs.

Finally, it is important to notice that such known devices tend to increase the rigidness of the shaker prongs, since they act on the transversal section of the prongs and on the fastening devices for the support crossbar, in order to improve endurance. Anyway, the increase of rigidness means an increase of the damage risk for the plant to be "combed out". In fact, known more rigid devices generally produce a too energetic dynamic work which is anyway less suitable for the exigencies of the specific type of plant to be treated.

As a matter of facts, each type of plant requires different work methods for ensuring both quality and quantity, in order to make in an effective way the detachment of the fruits to be harvested.

### Disclosure

The task of the present invention is that of solving the aforementioned problems, devising a reinforcement member for a shaker prong suitable to be used in apparatuses for harvesting olives and similar produce, which allows to perform in an efficient and safe way the harvesting of such produce.

Within such task, it is a further scope of the present invention that of providing a shaker prong having a solid and compact structure.

A further scope of the present invention is that of providing a shaker prong which is easy to assemble, disassemble and replace.

The cited scopes are attained, according to the present invention, by the reinforcement member and by the shaker prong according to claim 1 and to the dependent claims.

More precisely, the shaker prong, obtained by combining a shaker rod with a reinforcement member according to the invention, solves the cited problems thanks to the fact that it provides a removable reinforcement member, cooperating with the shaker rod for being reciprocally coupled and fastened to a support crossbar which is suitable to be used in an apparatus for harvesting olives or similar produce.

More precisely, the reinforcement member according to the invention shapes an annular insertion portion suitable for the insertion around the support crossbar of a comb sector of the harvesting apparatus. Such annular portion is as well crossed in a substantially diametrical way by opposed holes, respectively one first hole and one second hole, suitable for the insertion of the shaker rod. The coupling between the reinforcement member and the shaker rod is ensured by suitable fastening means which are as well suitable to determine in steady way the positioning of the prong on the support crossbar of the comb. Preferably such fastening means provide the helicoidal coupling of respective threaded tracts obtained on conjugated portions of the shaker rod and of the reinforcement member at the cited opposed holes.

According to a particularly advantageous aspect of the invention, the removable reinforcement member comprises a protection portion which is at least partially tubular, substantially extended along the axis of the first hole and of the second hole for the insertion of the shaker rod. Such protection portion has the important function of covering at least one tract of the shaker rod, increasing the resistant transversal section thereof, in the tract in which the cyclical flexion stress is greater during the work steps on the plant.

According to a further particular aspect of the invention, the cited protection portion of the reinforcement member can provide a longitudinal extension such as to contain in its inside the whole length of the shaker rod. In such case, the shaker rod acts as reinforcement core, while the protection portion acts as reinforcement and covering. Such embodiment is particularly suitable for harvesting fruits from plants which require a delicate work, in which it is preferable to make the reinforcement member, or at least the protection portion, in soft material, for example plastic or thermoplastic, the internal core working as support element and ensuring the required rigidness for making in a efficient way the dynamic work cycle of the harvesting apparatus.

Finally, according to a further aspect of the invention, the reinforcement member can comprise the protection portion and the insertion portion, as previously described, being realized as separate parts and suitable to be coupled through coupling means, for example of fast coupling, threaded, joint and/or of snap type directly coupling with the support crossbar or with the reinforcement member. In such case, it is possible to use different materials for optimizing the functional performance. For example, it is preferable to make the insertion portion of the reinforcement member in plastic rigid material, suitable to ensure the rigidness and the endurance required by the cyclical flexion stress. Instead, it is preferable and possible in such solution to separately provide the protection portion, mainly having a covering function, in soft material, for example plastic. Such solution has as well the important advantage to ensure a differentiated replacement of the parts, as well as a complete separation of the reinforcement core. According to a particular aspect of such embodiment, it is possible to provide that the above mentioned protection portion of the shaker rod is applied by moulding on the same shaker rod.

It is important to observe that, according to an embodiment of the invention, it is possible to provide that the reinforcement member comprise the same reinforcement annular portion, previously cited, arranged around the support crossbar for the prongs. According to such further aspect of the invention the above mentioned reinforcement annular portion is obtained by moulding it on the same support crossbar, instead of being inserted in removable way. Also in such case, for example, it is possible to provide that the protection portion of the rod is obtained by moulding it on the same rod.

Therefore, according to a characteristic of the invention, the prongs can result arranged, by insertion or by moulding of the reinforcement member according to the invention, in an optimal position with respect to the resistance, to the flexibility required for an optimal control of the expected performance and for an optimal working performance. The control of the flexibility, in particular, allows to reduce the production and the transmission of vibrations on the operator.

In particular, the insertion of the reinforcement member according to the invention has the advantage of allowing to choose and possibly to differentiate in an optimal way, for the same comb sector, the position, the kind of material and the size of the reinforcement member or of the reinforcement members to be applied to the support crossbar. In particular, it is possible to control the resistance and the flexibility of the prongs according to the kind of fruit to be harvested: for example, for hard olives of small size, to be harvested at not completed maturation, to obtain oils with reduced acidity, or for the case of olives of not reduced size, to be harvested at complete maturation, and therefore more delicate and exposed to the risk of bruises, as well as blueberries, or harder fruits like hazelnuts, walnuts, coffee.

Anyway, the use of the reinforcement member according to the invention, possibly shaping protection portions or associated with protection portions for the rod, as mentioned earlier, avoids the breakage of the shaker rods, and does not harm the plant and each of its parts, as branches, leaves, and fruits.

### Description of Drawings

Details of the invention shall be more apparent from the detailed description of a preferred embodiment of the reinforcement member for a shaker prong according to the invention, suitable for being used in an apparatus for harvesting olives and similar produce, illustrated for indicative purposes in the attached drawings, wherein:
figures 1 and 2 respectively show a perspective and transversal section view of a comb sector comprising a plurality of shaker prongs according to the invention;
figures 3 and 4 respectively show a lateral and section view according to a longitudinal median plane of the prong shown in figures 1 and 2;

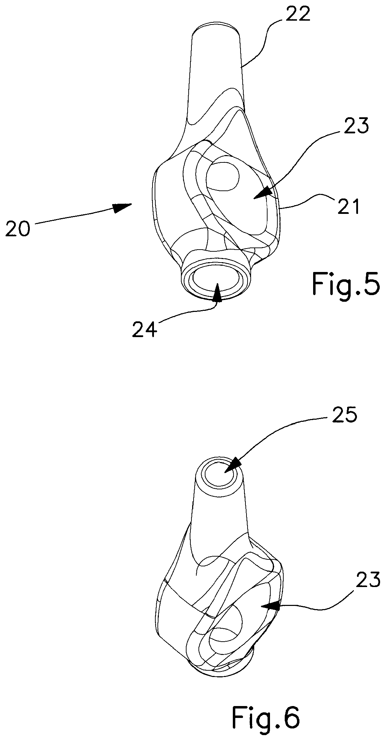

figures 5 and 6 respectively show perspective views according to different perspectives of a component of the prong shown in figures 1 to 4;
figures 7 and 8 respectively show a perspective and transversal section view of a comb sector comprising a plurality of shaker prongs in a second embodiment;
figures 9 and 10 respectively show a lateral and a section view according to a longitudinal median plane of the prong shown in figures 7 and 8;
figures 11 and 12 respectively show a perspective and transversal section view on a comb sector comprising a plurality of shaker prongs according to a third embodiment;
figures 13, 14 and 15 respectively show a lateral section view according to a longitudinal median plane and according to a longitudinal transversal plane of the prong shown in figures 11 and 12;
figure 16 shows a magnified view of a particular of the shaker prong shown in figure 15.

### Best Mode

With particular reference to such figures, a comb sector suitable to be used in an apparatus for harvesting olives and similar produce has been indicated in its entirety with 1. Generally, the apparatus, not entirely shown for the sake of simplicity, comprises a support body which bears at its top a shaker unit which is provided with at least one sector 1, for example a comb sector, bearing at least one rod-shaped shaker element.

The shaker unit, not illustrated, is operated by command means of electric or pneumatic type or having internal combustion, for producing the tilting of the comb sectors 1 according to a specific frequency, usually so high as to cause the detachment of fruits to be harvested from the plant, when at least one comb sector 1 is inserted in the foliage of the tree to be treated.

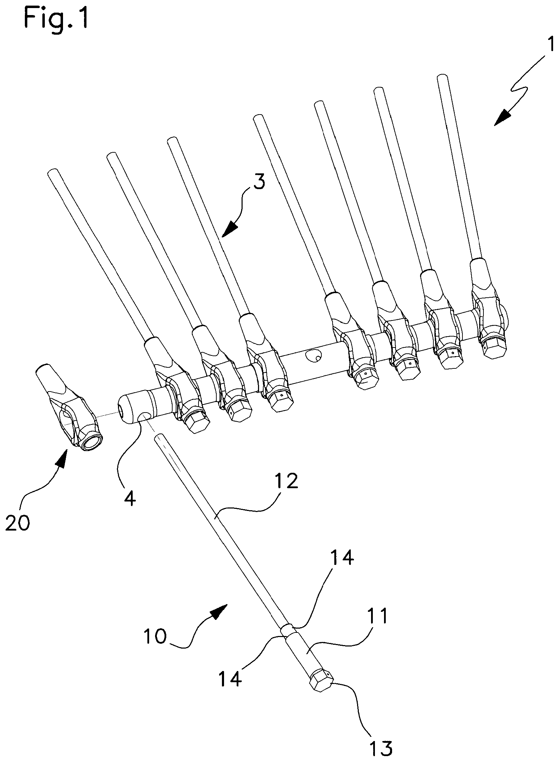

The comb sector 1 has a support structure 2 on which at least one shaker prong 3 is fastened. In the case illustrated in figure 1, the comb sector 1 comprises a plurality of shaker prongs 3 according to the invention, suitably spaced, in regular or irregular way, according to requirements of use. In the figure, eight prongs 3 are shown, but it is possible to provide as well a different number of shaker elements.

The support structure 2 is preferably made by a crossbar on which prongs 3 are fastened. The support crossbar 2 can be tubular or have circular section, but it can, alternatively, have also full, polygonal or irregular section, as long as it is suitable to support in fixed way the prongs 3.

Moreover, the support crossbar 2 has housings 4 for the prongs 3. Such housings are made through a corresponding plurality of holes 4 transversal to the crossbar axis, suitable for insertion of corresponding shaker rods 10 of the prongs 3, as it is described in the following.

More precisely, such holes 4 pass through the section of the support crossbar 2. In case the crossbar 2 is tubular, each hole 4 corresponds to a pair of coaxial holes, opposed in the section of the same tubular crossbar.

The holes 4 for housing the rods 10 can have parallel or differently inclined axes, for example, in order to arrange prongs 3 supported by the crossbar 2 in a fan shape. In this latter case, the axes of the transversal holes 4 preferably have an orientation which, starting from the central portion and approaching the end of the crossbar 2, progressively diverts from a direction substantially perpendicular to the longitudinal axis of the crossbar 2 to a more or less stressed inclination, so as to produce a diverging effect of the prongs 3, such as to ease the insertion and combing out operations for the foliage of the tree to be treated. Such tilting effect of the prongs can be produced or further stressed as well by making the support crossbar 2 suitably curved.

The support crossbar 2 finally has means for connection with the shaker unit, for example made through a hole 5 for central fastening.

Each shaker prong 3 is associated with the support crossbar 2 at a respective cavity or hole 4.

More precisely, the shaker prong 3 comprises the rod 10 and a reinforcement member 20 suitable to be reciprocally coupled and fastened to the support crossbar 2.

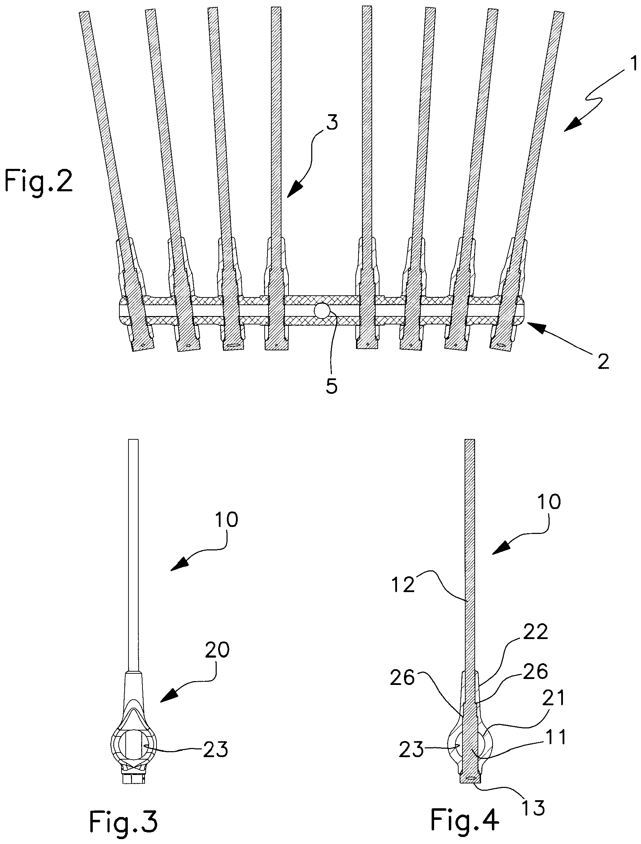

More precisely, as it is possible to see in particular in figures 3 and 4, the rod 10 has an extension substantially rectilinear and a preferably circular section. The rod 10 is preferably made of sufficiently rigid material, that is suitable for causing the fruits to detach from branches of the plant to be treated, but which is at the same time sufficiently elastic for adapting to the shape of the foliage, avoiding damages. Therefore, the rod 10 is preferably made of carbon fibre or similar materials.

The rod 10 shapes a coupling portion 11 for coupling with the reinforcement member 20 and possibly with the support crossbar 2 and a working portion 12 corresponding to the end tract suitable for interacting with the tree foliage and therefore with the fruits to be detached. The coupling portion 11, which is generally arranged at the end opposed to the working portion 12, shapes coupling and fastening means to the reinforcement member 20. In the illustrated case, the cited means are made by a threaded tract bearing an end head 13, suitable to allow the desired fastening (see figure 1).

The rod 10 can have one or more shoulders 14 or abutments, for passage between the threaded tract 11 and the working portion 12. Such shoulders 14 correspond to as many housings or abutments produced on the reinforcement member 20, as it is better described in the following.

The shoulders 14 allow as well to gradually reduce the transversal section of the rod 10 from the coupling portion 11, at which the flexion stress is higher, to the working portion 12, at which the transversal section must meet contrasting exigencies, on the one side it must reduce its size and keep high the flexion aptitude of the prong 3, on the other side it must ensure the highest solidity with respect to the dynamic stress.

The reinforcement member 20 comprises an insertion portion 21, substantially annular or slot-shaped, for coupling with the support crossbar 2, and a protection portion 22 suitable to protect the first tract of the rod 10, which is mostly stressed by flexion. More precisely, the annular portion 21 has an opening 23 having a shape preferably corresponding to the support crossbar 2, suitable to the easy insertion around this latter, for the positioning of the shaker prong 3 into the comb sector 1. In the illustrated case, the opening 23 has circular shape, so as to create a revolute pair with the support crossbar 2 at a respective fastening portion.

As an alternative, the opening 23 can have a different shape, provided that it is suitable to allow the insertion of the reinforcement member 20 into the crossbar 2. For example, the opening 23 and the crossbar 2 can both have polygonal section, so as to create a prismatic joint, suitable to give a particular radial orientation to the rod 10 protruding from the protection portion 22, with respect to the support crossbar 2.

The reinforcement member 20 comprises as well a first hole 24 and a second hole 25 which are coaxial and substantially diametrically opposed to the opening 13, so as to allow the axial insertion of the rod 10. Preferably, the annular portion 21 shapes on the rim of the first hole 24 a substantially flat housing for the head 13 of the rod 10. Instead, the second hole 25 is arranged according to the axis of the cited protection portion 22 which thus results to be a tubular appendix which extends in preferably radial manner starting from the annular portion 21 of the reinforcement member 20.

More precisely, the annular portion 21 and the protection portion 22 of the reinforcement member 20 cooperate for reinforcing the resistance to flexion stress of the rod 10 during the harvesting step. In fact, while the protection portion 22 covers and protects the tract of the rod 10 protruding from the crossbar 2, increasing the resistant section, the annular portion 21 contributes to the flexion resistance of the rod 10, with a hooping support action which peripherally covers the crossbar 2 itself.

Finally, it is important to underline that the reinforcement member 20 comprises means for fastening and coupling with the rod 10. More precisely, the coaxial first hole 24 and second hole 25 can provide, as it was described before for the rod 10, respective threaded tracts, suitable to be coupled with the threaded tract 11 of the rod 10. Moreover, as for the rod 10, the second hole 25 can comprise suitable housings 26 for the shoulders 14 possibly present on the rod 10.

The functioning of the shaker prong for apparatuses for harvesting olives and similar produce is easy to understand from the preceding description.

In a first assembling step of a comb sector, provided for example with a plurality of prongs according to the invention, the operator prearranges the support crossbar 2 and at least one reinforcement member 20.

Subsequently, the operator inserts the annular portion 21 of the reinforcement member 20 around the support crossbar 2.

The annular portion 21 is then placed on a respective tract of the crossbar 2 suitable for fastening the prong 3 to be assembled, providing to align transversal holes 4 engaged in the fastening with the first hole 24 and the second hole 25 of the reinforcement member 20, respectively.

Then, the rod 10 is transversally inserted into the crossbar 2, passing through the first hole 24, the transversal holes 4 and the second hole 25.

The rod 10 is then fixed to the so arranged reinforcement member. In the case illustrated as an example, the reciprocal fastening occurs by screwing the respective threaded tracts, obtained at the first hole 24 and at the second hole 25 of the reinforcement member 20, with the respective threaded tract 11 of the rod 10.

By assembling in the disclosed way along the crossbar 2 possible further prongs 3, it is possible to shape a comb sector suitable to be connected through connection means 5 with the fitted handling unit of the apparatus for harvesting olives.

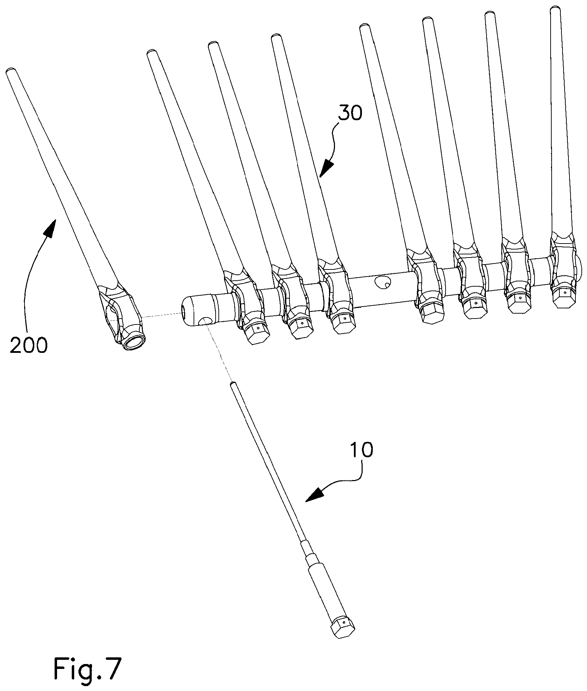

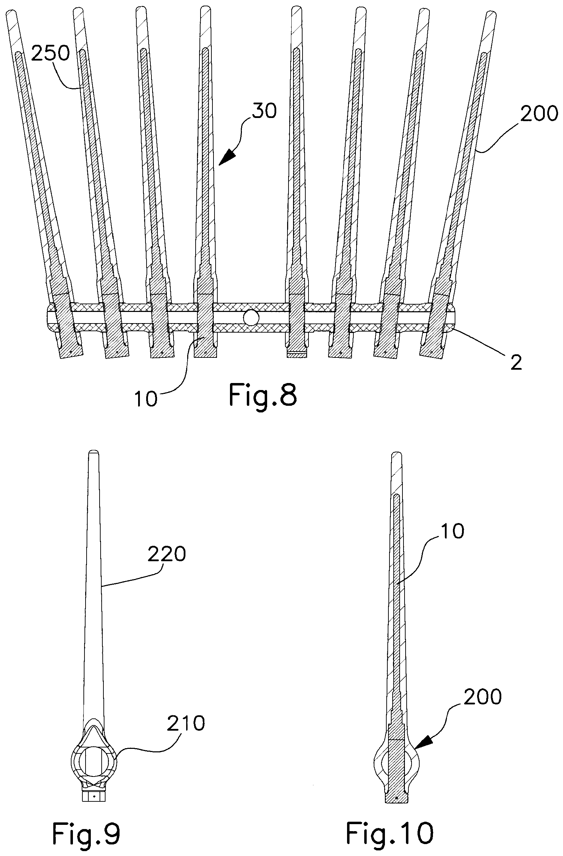

According to a further embodiment shown in figures 7 to 10, the shaker prong 30 provides, as it was described before, a rod 10 connected, in use, with a reinforcement member 200 placed on the support crossbar 2.

Differently from what was described before, the reinforcement member 200 comprises a protection portion 220 which extends longitudinally until overcoming the longitudinal extension of the rod 10. In other words, the protection portion 220 comprises in its inside a second blind hole 250 having an extension which is able to contain and protect the free end of the working portion 12 of the rod 10. In such case, then, the reinforcement member 200 acts as protection cover for the shaker element, while the rod 10 acts as core having a function of resistant element in the operation of the harvesting apparatus. Therefore, in this embodiment, it is preferable that the reinforcement member 200 is made of thermoplastic soft and flexible material so as to ensure the protection of the inner core, that is of the rod 10, besides remaining delicate on the plant. The inner rod 10 is preferably made of rigid and solid material, for example in carbon, but also, advantageously, of a cheaper material such as wood, for example chestnut, which is very solid, or oak or bamboo wood, which is very light, thanks to the protective function performed by the reinforcement member, against the atmospheric external agents, in particular against the wearing action of sun rays and water.

As long as it is concerned, it is important to underline as well that the reinforcement member 200 interposes itself in safe way between the rod 10 and the plant to be treated. This enables to use for the rod 10 materials which are even not suitable for working with edible materials because of, for example, risk of danger of polluting residues on the plant or on the fruits to be harvested. Therefore, thanks to the interposition of the reinforcement member 200 covering the whole rod 10, it is possible to provide any material mechanically suitable for building the rod 10.

The functioning is completely similar to what previously described for the first illustrated embodiment.

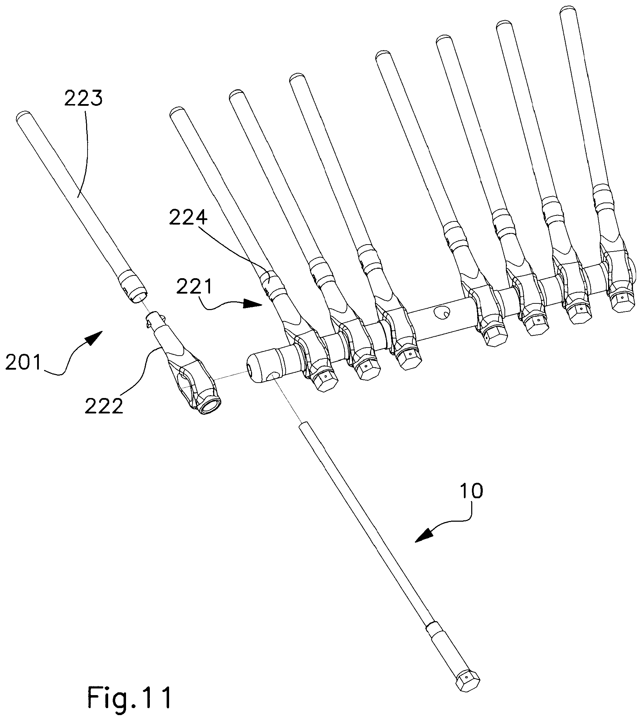

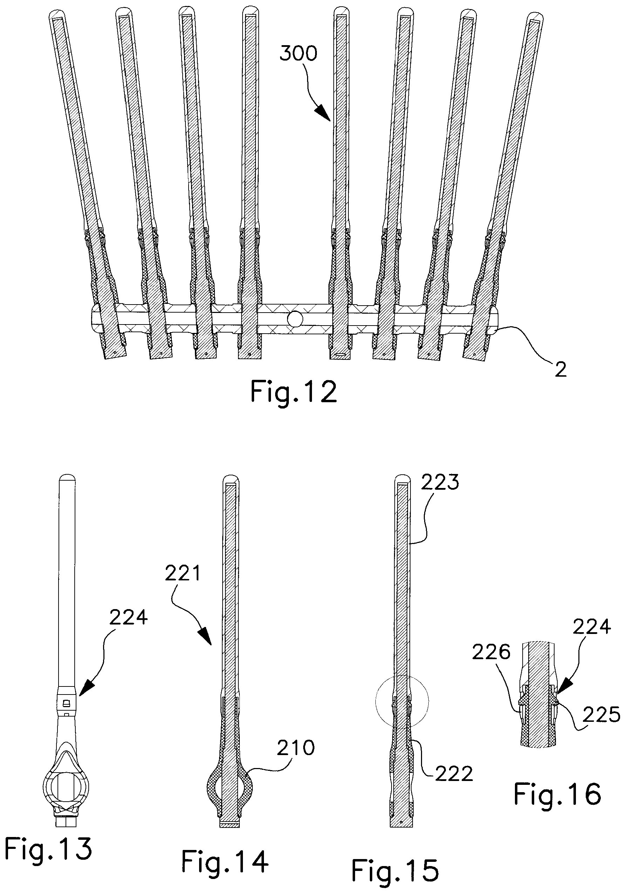

According to a third embodiment of the prong 300, shown in figures 11 to 16, the respective reinforcement member 201 is very similar to the one illustrated in the second embodiment, since it provides a protection portion 221 suitable to protect and entirely contain the working portion 12 of the rod 10. Differently from what has been illustrated before, anyway, in this case, the protection portion 221 is made of many separate parts. More precisely, the protection portion 221 can comprise a sleeve 222 integrally connected with the annular portion 210 for its insertion in the support crossbar 2, a separated protection cover 223 and means 224 for connecting the sleeve 222 with the cover 223. Connection means 224 can be for example of the type illustrated in figure 16, joint, or of equivalent type, provided that they can guarantee the safe fastening of the connected parts. In particular, in the case illustrated as an example, the connection means 224 comprise a plurality of clutch teeth 225 peripherally protruding at the end of the sleeve 222 and corresponding with respective clutch slots 226 peripherally provided at the connection end of the cover 223. The connection system is, in this case, very easy, thanks to the snap joint of the teeth 225 in the slots 226, and it occurs by simply axially inserting the cover 223 onto the sleeve 222.

Such embodiment is particularly advantageous, since it allows to widen the choice of the materials according to the mechanical characteristics required for the different portions. More precisely, it is possible to make the annular portion 210 as well as the sleeve 222 which is integral with it, in rigid thermoplastic material, in order to increase the operative flexion resistance of the rod 10 at the prong sections which are mainly stressed in use. On the contrary, it is possible to provide the cover 223 in soft plastic material, that is suitable to protect the rod 10 without harming the plant during the functioning. Alternatively, it is possible to provide that the protection portion 223 of the shaker rod 10 can be directly moulded on the same rod.

As previously underlined for the second embodiment, the protection function of the reinforcement member 201 protects the plant from the direct contact with the rod 10, thus allowing the use of any material for this latter, even a dangerous or polluting one, provided that it is mechanically suitable.

Also in this case, the functioning of the shaker prong 300 is very similar to what previously described.

According to an embodiment of the invention, not shown in the figures, and having similar functioning, it is possible to provide that the reinforcement member comprises the same reinforcement annular portion, as described above for the various embodiments, arranged around the support crossbar 2 of the prongs 3 to support, with an equally hooping reinforcing action, the dynamic cutting and flexing stress which act in use on the shaker rod 10 associated with the reinforcement member. More precisely, according to such embodiment, the reinforcement annular portion is obtained by moulding on the support crossbar 2 itself, and then it is shaped in a similar way for "surrounding" the support crossbar 2, rather than being inserted on it in removable manner. in this case, for example, it is possible to provide that the protection portion of the shaker rod 10, if provided, is formed by moulding, on the rod itself.

In particular, it is possible to provide, according to this embodiment, to mould the support crossbar 2 in a single stage or in multiple stages and to mould on it the reinforcement member according to the invention. Such moulding steps can be carried out by using only one type of material or different materials, thus controlling the hardness, resistance, flexibility, and possibly varying shapes and thickness both for the support crossbar 2 and for the reinforcement member. In fact, as previously described, the stress which is produced on a comb sector of the described type, may vary along the support crossbar. Therefore, shaker prongs of different length may be provided along the support crossbar, differently spaced according to the stress provided by use. Even the wear, consequently, can change between different prongs of the comb sector.

The reinforcement member according to the invention, which is suitable to be used in apparatuses for harvesting olives and similar produce, allows therefore to attain the scope of performing in a efficient and safe way the harvesting of olives and similar produce.

In practice, the embodiment of the invention, the materials used, as well as the shape and dimensions, may vary depending on the requirements.

Should the technical characteristics mentioned in each claim be followed by reference signs, such reference signs were included strictly with the aim of enhancing the understanding the claims and hence they shall not be deemed restrictive in any manner whatsoever on the scope of each element identified for exemplifying purposes by such reference signs.

## Claims

1. Reinforcement member (20, 200, 201) for a shaker prong (3, 30, 300), of the type comprising a shaker rod (10), suitable for being used in an apparatus for harvesting olives and similar produce, wherein it comprises an annular insertion portion (21) for the insertion around a support crossbar (2) for said shaker rod (10), said reinforcement member (20, 200, 201) comprising reciprocal coupling and fastening means (24, 25) with said shaker rod (10) **characterized in that** it comprises a first hole (24), and a second hole (25) coaxial and opposed with respect to said annular insertion portion (21) for the insertion of said shaker rod (10).

2. Reinforcement member according to claim 1, **characterized in that** it is combined with a said shaker rod (10) suitable for being inserted in suitable transversal holes (4) of said support crossbar (2), for shaping a said shaker prong (3, 30, 300) suitable to be used in a said apparatus for harvesting olives and similar fruits, said reinforcement member (20, 200, 201) and said shaker rod (10) comprising as well means for reciprocal coupling and fastening (11, 24, 25).

3. Reinforcement member according to claim 1 or 2, **characterized in that** said annular insertion portion (21) comprises an opening (23) having a shape which matches the section of said support crossbar (2), said first hole (24) and second hole (25, 250) being diametrically opposed around said opening (23).

4. Reinforcement member according to claim 3, **characterized in that** it comprises a protection portion (22, 220, 221) at least partially tubular which axially contains said second hole (25, 250) for inserting said shaker rod (10), said protection portion (22, 220, 221) being suitable to at least partially protect said shaker rod (10) in the inserted position.

5. Reinforcement member according to claim 4, **characterized in that** said protection portion (220) longitudinally extends until it completely covers said shaker rod (10), said second hole (250) extending in a corresponding manner inside said protection portion (220).

6. Reinforcement member according to claim 5, **characterized in that** said protection portion (221) comprises a sleeve (222) integrally connected with said annular insertion portion (210) for the insertion around said support crossbar (2), a protection cover (223) and connection means (224) for connecting said sleeve (222) with said cover (223).

7. Reinforcement member according to claim 6, **characterized in that** said connection means (224) for connecting said sleeve (222) with said cover (223) comprises at least one clutch tooth (225) peripherally protruding at the edge of said sleeve (222), said cover (223) peripherally comprising in a corresponding way at least one respective clutch slot (226).

8. Reinforcement member according to one of the previous claims, **characterized in that** said means for coupling and fastening said reinforcement member (20, 200, 201) to said shaker rod (10) comprises respective threaded tracts (11, 24, 25) for reciprocal fastening.

9. Reinforcement member according to claim 1, **characterized in that** said annular insertion portion (21) is obtained by integrally moulding with said support crossbar (2).

10. Reinforcement member for a shaker rod (10) according to one of the claims 4 to 9, **characterized in that** said protection portion (22, 220, 221) is obtained by moulding on said shaker rod (10).

11. Comb sector (1) suitable to be used in a said apparatus for harvesting olives and similar produce of the type comprising one or more shaker prongs associated with a said support crossbar (2), **characterized in that** it comprises one or more shaker prongs (3, 30, 300) provided with a reinforcement member (20, 200, 201) according to one of claims 2 to 9.

12. Apparatus for harvesting olives and similar produce comprising one or more shaker prongs (3, 30, 300) provided with a reinforcement member (20, 200, 201) according to one of claims 2 to 9.

## Patentansprüche

1. Verstärkungselement (20, 200, 201) für einen Rüttlerzinken (3, 30, 300) vom Typ umfassend eine Rüttlerstange (10), das dazu eignet ist, in einer Vorrichtung zum Ernten von Oliven und ähnlichen Produkten eingesetzt zu werden, wobei es ein ringförmiges Einsetzabschnitt (21) zum Einsetzen um einen Stützquerstab (2) für die Rüttlerstange (10), wobei das Verstärkungselement (20, 200, 201) gegenseitige Kupplungs- und Befestigungsmittel (24, 25) mit der Rüttlerstange (10) umfasst, **dadurch gekennzeichnet, dass** es ein erstes Loch (24), und ein zweites Loch (25) umfasst, das koaxial und gegenüberliegend bezüglich des ringförmigen Einsetzabschnitts (21) zum Einsetzen der Rüttlerstange (10) ist.

2. Verstärkungselement nach Anspruch 1, **dadurch gekennzeichnet, dass** es mit der Rüttlerstange (10) kombiniert ist, die dazu geeignet ist, in geeigneten Querlöchern (4) des Stützquerstabs (2) eingesetzt zu werden, um einen Rüttlerzinken (3, 30, 300) zu bilden, der dazu geeignet ist, in einer Vorrichtung zum Ernten von Oliven und ähnlichen Früchten eingesetzt zu werden, wobei das Verstärkungselement (20, 200, 201) und die Rüttlerstange (10) auch Mittel zur gegenseitigen Kupplung und Befestigung (11, 24, 25) umfassen.

3. Verstärkungselement nach Anspruch 1 oder 2, **dadurch gekennzeichnet, dass** das ringförmige Einsetzabschnitt (21) eine Öffnung (23) umfasst, die eine Form hat, die dem Schnitt des Stützquerstabs (2) entspricht, wobei das erste Loch (24) und das zweite Loch (25, 250) diametral entgegengesetzt um die Öffnung (23) sind.

4. Verstärkungselement nach Anspruch 3, **dadurch gekennzeichnet, dass** es ein teilweise rohrförmiges Schutzabschnitt (22, 220, 221) umfasst, das axial das zweite Loch (25, 250) zum Einsetzen der Rüttlerstange (10) enthält, wobei das Schutzabschnitt (22, 220, 221) dazu geeignet ist, die Rüttlerstange (10) in der eingesetzten Position zumindest teilweise zu schützen.

5. Verstärkungselement nach Anspruch 4, **dadurch gekennzeichnet, dass** das Schutzabschnitt (220) sich längs erstreckt, bis es vollständig die Rüttlerstange (10) abdeckt, wobei das zweite Loch (250) sich entsprechend innerhalb des Schutzabschnitts (220) erstreckt.

6. Verstärkungselement nach Anspruch 5, **dadurch gekennzeichnet, dass** das Schutzabschnitt (221) eine Hülse (222) umfasst, welche einstückig mit dem ringförmigen Einsetzabschnitt (210) zum Einsetzen um den Stützquerstab (2), eine Schutzabdeckung (223), und Verbindungsmittel (224) zum Verbinden der Hülse (222) mit der Abdeckung (223) verbunden ist.

7. Verstärkungselement nach Anspruch 6, **dadurch gekennzeichnet, dass** die Verbindungsmittel (224) zum Verbinden der Hülse (222) mit der Abdeckung (223) zumindest einen Kupplungszahn (225) umfassen, der umlaufend am Rand der Hülse (222) hervorsteht, wobei die Abdeckung (223) entsprechend umlaufend zumindest einen Kupplungsschlitz (226) umfasst.

8. Verstärkungselement nach einem der vorhergehenden Ansprüche, **dadurch gekennzeichnet, dass** die Mittel zur Kupplung und Befestigung des Verstärkungselements (20, 200, 201) an der Rüttlerstange (10) jeweilige Gewindeabschnitte (11, 24, 25) zur gegenseitigen Befestigung umfassen.

9. Verstärkungselement nach Anspruch 1, **dadurch gekennzeichnet, dass** der ringförmige Einsetzabschnitt (21) durch ein einstückiges Formverfahren mit dem Stützquerstab (2) erhalten wird.

10. Verstärkungselement für eine Rüttlerstange (10) nach einem der Ansprüche 4 bis 9, **dadurch gekennzeichnet, dass** der Schutzabschnitt (22, 220, 221) durch ein Formverfahren auf der Rüttlerstange (10) erhalten wird.

11. Kammsektor (1), der dazu geeignet ist, in einer Vorrichtung zum Ernten von Oliven und ähnlichen Produkten vom Typ umfassend einen oder mehrere Rüttlerzinken, die dem Stützquerstab (2) zugeordnet sind, **dadurch gekennzeichnet, dass** es einen oder mehrere Rüttlerzinken (3, 30, 300) umfasst, die mit einem Verstärkungselement (20, 200, 201) nach einem der Ansprüche 2 bis 9 versehen sind.

12. Vorrichtung zum Ernten von Oliven und ähnlichen Produkten umfassend einen oder mehrere Rüttlerzinken (3, 30, 300), die mit einem Verstärkungselement (20, 200, 201) nach einem der Ansprüche 2 bis 9 versehen sind.

## Revendications

1. Élément de renforcement (20, 200, 201) pour un fourchon de secoueur (3, 30, 300) du type comprenant une tige de secoueur (10), pouvant être utilisé dans un appareil de récolte d'olives et de produits similaires, dans lequel il comprend une partie d'insertion annulaire (21) pour l'insertion autour d'un traverse de support (2) pour ladite tige de secoueur (10), ledit élément de renforcement (20, 200, 201) comprenant des moyens de couplage et de fixation réciproques (24, 25) avec ladite tige de secoueur (10), **caractérisé en ce qu'**il comprend un premier trou (24) et un second trou (25) coaxiales et opposés par rapport à ladite partie d'insertion annulaire (21) pour l'insertion de ladite tige de secoueur (10).

2. Élément de renforcement selon la revendication 1, **caractérisé en ce qu'**il est combiné avec ladite tige de secoueur (10), pouvant être insérée dans des trous transversales (4) appropriés de ladite traverse de support (2), pour former un fourchon de secoueur (3, 30, 300) pouvant être utilisé dans ledit appareil de récolte d'olives et de fruits similaires, ledit élément de renforcement (20, 200, 201) et ladite tige de secoueur (10) comprenant aussi des moyens pour le couplage et la fixation réciproques (11, 24, 25).

3. Élément de renforcement selon la revendication 1 ou 2, **caractérisé en ce que** ladite partie d'insertion annulaire (21) comprend une ouverture (23) ayant une forme qui correspond à la section de ladite traverse de support (2), ledit premier trou (24) et ledit second trou (25, 250) étant diamétralement opposés autour de ladite ouverture (23).

4. Élément de renforcement selon la revendication 3, **caractérisé en ce qu'**il comprend une partie de protection (22, 220, 221) au moins partiellement tubulaire, qui contient axialement ledit second trou (25, 250) pour insérer ladite tige de secoueur (10), ladite partie de protection (22, 220, 221) pouvant protéger au moins partiellement ladite tige de secoueur (10) dans la position insérée.

5. Élément de renforcement selon la revendication 4, **caractérisé en ce que** ladite partie de protection (220) s'étend longitudinalement jusqu'à ce qu'elle couvre complètement ladite tige de secoueur (10), ledit second trou (250) s'étendant de manière correspondante dans ladite partie de protection (220).

6. Élément de renforcement selon la revendication 5, **caractérisé en ce que** ladite partie de protection (221) comprend un manchon (222) relié de façon solidaire à ladite partie d'insertion annulaire (210) pour l'insertion autour de ladite traverse de support (2), une couverture de protection (223) et des moyens de raccordement (224) pour relier ledit manchon (222) à ladite couverture (223).

7. Élément de renforcement selon la revendication 6, **caractérisé en ce que** lesdits moyens de raccordement (224) pour relier ledit manchon (222) à ladite couverture (223) comprennent au moins une dent d'embrayage (225) qui dépasse à la périphérie d'un bord dudit manchon (222), ladite couverture (223) comprenant à la périphérie de manière correspondante au moins une fente d'embrayage (226) respective.

8. Élément de renforcement selon l'une quelconque des revendications précédentes, **caractérisé en ce que** lesdits moyens pour le couplage et la fixation réciproques dudit élément de renforcement (20, 200, 201) à ladite tige de secoueur (10) comprend des sections filetées respectives (11, 24, 25) pour la fixation réciproque.

9. Élément de renforcement selon la revendication 1, **caractérisé en ce que** ladite partie d'insertion annulaire (21) est obtenue par moulage de façon solidaire avec ladite traverse de support (2).

10. Élément de renforcement pour une tige de secoueur (10) selon l'une quelconque des revendications 4 à 9, **caractérisé en ce que** ladite partie de protection (22, 220, 221) est obtenue par moulage sur ladite tige de secoueur (10).

11. Secteur à peigne (1) pouvant être utilisé dans ledit appareil de récolte d'olives et de produits similaires du type comprenant un ou plusieurs fourchons de secoueur associés avec une traverse de support (2), **caractérisé en ce qu'**il comprend un ou plusieurs fourchons de secoueur (3, 30, 300) pourvus d'un élément de renforcement (20, 200, 201) selon l'une quelconque des revendications 2 à 9.

12. Appareil de récolte d'olives et de produits similaires comprenant un ou plusieurs fourchons de secoueur (3, 30, 300) pourvus d'un élément de renforcement (20, 200, 201) selon l'une quelconque des revendications 2 à 9.
